# EUROPEAN PATENT SPECIFICATION

(11) **EP 4 070 967 B1**
(45) Date of publication and mention of the grant of the patent: **24.01.2024**
(21) Application number: 21397506.3
(22) Date of filing: 07.04.2021
(51) Int. Cl.: B60C 5/00, B60C 5/04, B60C 23/00, B60C 23/04, B29D 30/00

(54) **ASSEMBLY FOR AN INNER TYRE TUBE**
ANORDNUNG FÜR EINEN REIFENSCHLAUCH
ENSEMBLE POUR UN TUBE INTERNE DE PNEU

(43) Date of publication of application: 12.10.2022
(73) Proprietor: Nokian Renkaat Oyj, 37101 Nokia (FI)
(72) Inventor: SOINI, Teemu, 33300 TAMPERE (FI); ONNELA, Hannu, 37101 NOKIA (FI); OJALA, Jari, 37101 NOKIA (FI)
(74) Representative: Berggren Oy

(56) References cited:
- WO-A1-2016/109030
- JP-A- 2006 116 989
- JP-A- 2011 084 123

## Description

### Technical field

This specification relates inner tubes for tires.

### Background

It is known that tires may be equipped with devices for sensing measures of interest such as air pressure within a tire. Such devices transmit the information via low-frequency radio to, for example, the vehicle's onboard computer, and to a corresponding display in the instrument cluster, if the vehicle is equipped with such display.

Tire-pressure sensors are typically integral to what is known as the Tire Pressure Monitoring System (TPMS), and said sensors are usually attached to the valve-stem assembly at the rim of each tire. Sensors may also be attached onto the inner liner of the tire by using adhesive or other mounting means.

However, the known solutions in the art are only suitable for vehicles, wherein the tires have no inner tubes. Some vehicles have inner tubes inserted into the tires to provide the airtight means for maintaining tire pressure. The solutions mentioned above are not suitable for those vehicles equipped with inner tubes, as it is not possible to access the air cavity for measuring at least temperature and pressure.

JP2006116989A discloses an air bladder having a hollow annular shape, which air bladder is stored in a tire to form a safety tire. The tire further comprises an electronic device. JP2011084123A discloses a tire having a double structure in which the outer circumferential part of an inside tube tire and the inner circumferential part of an outside tubeless tire are made to face each other. WO2016/109030A1 discloses an inflatable electronics band for use in a tire.

### Summary

The invention relates to an assembly for enabling a module comprising an electronic device to access the air cavity of an inner tube of a tire.

Thus, according to a first aspect of the invention, there is provided an assembly for an inner tube for a tire. The assembly comprises
- a base film, which is forming a part of the inner tube or configured to be attached to the inner tube,
- a ring, which is inserted into a hole through the base film, said ring comprising
   o internal threads of a fasten mechanism,
- a plug, which is removably insertable in the ring, said plug comprising
   o external threads of the fasten mechanism,
   o a first end having a first surface adapted to face outwards a cavity of the inner tube when inflated,
   o a second end having a second surface adapted to face inwards the cavity of the inner tube and adapted for attaching a module comprising an electronic device.

The electronic device may for example a sensor, such as a sensor for sensing temperature and/or pressure. The assembly according to the invention enables the conditions inside the inner tube to be monitored accurately, thus making the driving safer.

The base film may be a part of the inner tube, thus offering an simplified manufacturing process of the inner tube comprising the assembly. The base film may also be a separate patch, thus allowing manufacturing the assembly at different premises than the inner tube. It is to be noted that the term "separate patch" used herein does not mean separating from the ring; rather, it means the patch is a separate, different item from the inner tube.

Further, the arrangement of the ring and the plug makes it a lot easier to change the module according to practical needs as compared to prior art solutions.

Thus, according to a second aspect of the invention, there is provided an inner tube for a tire. Said inner tube comprises an exterior surface and an interior surface, the latter defining a cavity when the inner tube is inflated. Said inner tube further comprises
- a ring, which is inserted into a hole through the inner tube, said ring comprising
   o internal threads of a fasten mechanism,
- a plug, which is removably insertable in the ring, said plug comprising
   o external threads of the fasten mechanism,
   o a first end having a first surface facing outwards the cavity of the inner tube,
   o a second end having a second surface facing inwards the cavity of the inner tube and being adapted for attaching a module comprising an electronic device.

The invention also include a sensor-assembly for an inner tube for a tire or of an inner tube for a tire, said sensor-assembly comprising any of the assembly disclosed herein, and a sensor.

In the second aspect, the ring may be inserted into a hole through a base film, which is a separate patch which has been attached to the exterior or the interior surface of the inner tube.

According to a third aspect of the invention, there is provided a method for attaching such assembly to an inner tube for a tire. The method comprises
- preparing an assembly according to the disclosed solutions, wherein the base film is a separate patch,
- making a hole on the surface of the inner tube, said hole is not smaller than the hole of the base film,
- applying adhesive onto a contacting surface of the base film, wherein said contacting surface is to be contacted with the inner tube,
- attaching the assembly to the inner tube while aligning the hole of the inner tube and the hole of the base film,
- pressing the assembly to the inner tube while curing the adhesive.

As mentioned, the term "separate patch" used herein does not mean separating from the ring; rather, it means the patch is a separate, different item from the inner tube.

The main embodiments are characterized in the independent claims. Various embodiments are disclosed in the dependent claims. The embodiments and examples recited in the claims and in the specification are mutually freely combinable unless otherwise explicitly stated.

### Brief description of the drawings

Fig. 1 shows a schematic drawing, by way of an example, of a cross-dimensional view of an assembly according to the disclosed solution.
Fig. 2a shows a schematic drawing, by way of an example, of a cross-dimensional view of the assembly shown in Fig. 1, attached to an inner tube, which is shown partially.
Fig. 2b shows a schematic drawing, by way of another example, of a cross-dimensional view of the assembly shown in Fig. 1 with slight variation, attached to an inner tube, which is shown partially.
Fig. 3 shows a schematic drawing, by way of another example, of a cross-dimensional view of an assembly according to the disclosed solution.
Fig. 4 shows a schematic drawing, by way of an example, of a perspective view of an inner tube, shown partially, comprising an assembly according to the disclosed solution.

The Figures are intended to illustrate the general principles of the disclosed invention. Therefore, the illustrations in the Figures are not necessarily in scale or suggestive of precise layout of system components.

### Reference signs:

- 100: assembly
- 101: base film
- 201: base film
- 102: ring
- 103: plug
- 103a: first surface
- 103b: second surface
- 104: circumferential protruding shoulder
- 105: O-ring
- 106: module
- 110: inner tube (partly)
- X: direction of the axis of the ring
- Z: rotational axis of the inner tube
- α: angle

### Detailed description

Reference may be made to Figures. The invention relates to an assembly 100 for an inner tube. Preferably, such an assembly 100 is for an inner tube 110 for a tire. For example, such an assembly 100 may be for an inner tube for a tire for a heavy-duty vehicle, such as a tractor, a caterpillar, a harvester or a front loader; such tire can also be referred as heavy tire. The assembly 100 is adapted for attaching thereto a module 106 comprising an electronic device, such as a sensor.

According to the invention, the assembly 100 comprises a base film 101, 201. The base film 101, 201 serves as a base for other components of the assembly 100.

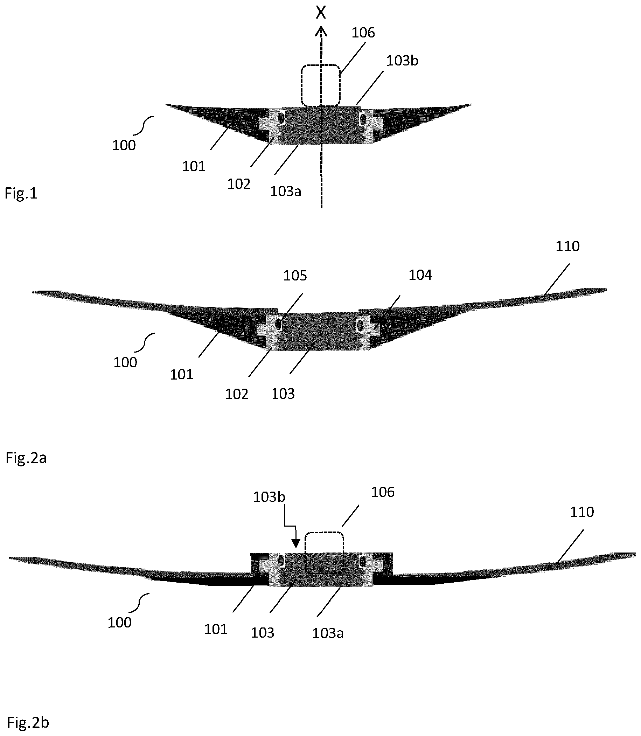

The base film 101 may be a patch, as illustrated in Fig. 1, Fig. 2a and Fig. 2b. The shape and dimensions of the base film 101 may vary according to practical needs. Fig. 2a and Fig. 2b show explanatory variations of the base film 101. The base film 101 as a separate patch can attach to the inner tube 110 by attaching the base film 101 to a surface of the inner tube 110, as illustrated in Fig. 2a and Fig. 2b. The base film 101 may be attached to the exterior surface of the inner tube, and thus the assembly 100 is suitable for any commercially available inner tube. Thus, the assembly 100 may be manufactured at a place where the equipment for manufacturing the inner tube is not necessarily required, and the assembly 100 having a small size as compared with an inner tube is easily stored and transported to inner tube manufacturers. On the other hand, the base film 101 may also be attached to the interior surface of the inner tube during 110 the vulcanization process of the inner tube 110, so that the external surface of the inner tube is kept even.

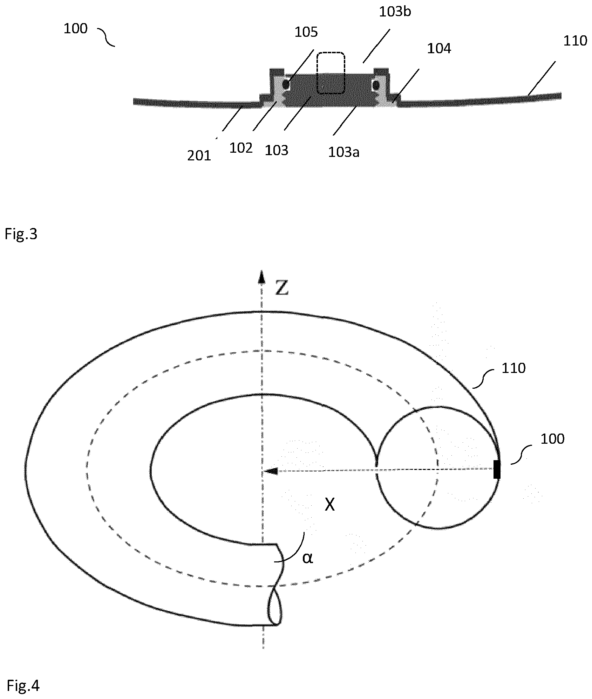

Alternatively, the base film 102 may also be forming a part of the inner tube 110, as illustrated in Fig. 3. In this case, a separate patch is not needed. In other words, the inner tube 110 serves as the base film 102 for other components of the assembly 100. This configuration simplifies the process of manufacturing the inner tube 110 comprising the assembly 100.

The assembly 100 further comprises a ring 102. The base film 101, 201 comprises a hole for the ring 102 to insert to. Thus, the ring 102 is laterally surrounded by the base film 101, 201. The ring 102 comprises internal threads of a fasten mechanism. The ring 102 provides mechanical support for the assembly 100 on the surface of the inner tube 110. The assembly 100 further comprises a plug 103, which comprises external threads of said fasten mechanism. The plug 103 can be inserted in the ring 102 by screwing, thereby forming the fasten mechanism. The inserted plug 103 can be removed from the ring 102 by screwing reversely without damaging the joining components, e.g. the plug 103 and the ring 102. Thus, the ring 102 and plug 103 together create a non-permanent joint. The internal threads of the ring 102 and the external threads of the plug 103 are designed so, that the fasten mechanism is substantially air-tight. Thus, the ring 102 and the plug 103 together prevent air leakage when the inner tube 110 is inflated.

An additional O-ring 105 situated between the ring 102 and the plug 103, when the plug 103 is inserted in the ring 102, may be used to further enhancing the air-tightness. The O-ring 105 made of elastic material may be for example seated in a groove of the internal threads of the ring 102 or of the external threads of the plug 103. When the ring 102 is inserted, the O-ring 105 is compressed and creating a seal at the interface. Also, an additional cover on top of the assembly 100 may be used to operate as an additional air barrier.

As can be seen in Fig. 2a, Fig. 2b and Fig. 3, the inner tube 110 also comprises a hole. In the example as illustrated in Fig. 3, the hole of the inner tube 110 is the hole of the base film 201. In the examples as illustrated in Fig. 2a and Fig. 2b, the hole of the inner tube 110 may not necessarily be of exactly the same size as the hole of the base film 101, as long as the module 106 can access the cavity of the inner tube, and the assembly 100 can cover the entire hole of the inner tube 110 when the plug 103 is inserted in the ring 102.

The base film 101, 201 preferably comprises elastic material, such as elastomer-based material. Preferably, the base film 101, 201 is made of a material comprising elastic material, such as elastomer-based material. In the case where the base film 201 is part of the inner tube 110, the base film 201 is naturally made of the same material as the inner tube 110, such as a material comprising natural and/or synthetic rubber, such as butyl rubber. In the case where the base film 101 is a separate patch, the base film 101 may be made of the same or a different material as the inner tube 110. As shown in Fig. 1 to Fig. 3, the ring 102 according to the invention is inserted into a hole of the base film 101, 201. The base film 101, 201 may be attached to the edge of the ring 102 by, for example, using adhesive. Preferably, the base film 101, 201 is attached to the ring 102 via a curing process, thereby providing strong adhesion and good seal. Preferably, the base film 101, 201 comprises natural and/or synthetic rubber, and the base film 101, 201 is vulcanized to the ring 102.

The ring 102 advantageously comprises a material that provides rigidity, such as metal, alloy, polymer, or composite. Preferably, the ring 102 is made of a material comprising metal, alloy, polymer, or composite. Material comprising copper such as brass is preferable thanks to its good strength and atmospheric/aqueous corrosion resistance. Material comprising polymer such as polyamide is also preferable thanks to its good rigidity, durability and strength. Further, it is found that, a ring 102 comprises polymer, such as plastic, contributes the improvement of the audibility of a sensor installed to the assembly 100 via the module 106 on an inflated inner tube 110.

The dimensions, such as thickness, length, and diameter, of the ring 102 may be designed according to practical applications. It is preferable that the diameter of the ring 102 is no more than 40 mm, preferably no more than 30 mm, measured from the outmost edge of the ring 102, so that the running performance of the tire is well-maintained.

The ring 102 advantageously further comprises a circumferential protruding shoulder 104, which protrudes laterally outwards from the ring 102 and is embedded in the base film 101, 201, to further improve the strength of attachment between the base film and the ring. Preferably, the circumferential protruding shoulder 104 comprises at least one hole, which further enhances the attachment between the ring 102 and the base film 101, 201, as the uncurved material or adhesive for the base film can flow through the hole(s) when the base film 101, 201 is attached/adhered/vulcanized to the ring 102 and provide a firm binding after hardening.

The plug 103 advantageously comprises material that enables the radio frequency communication to take place. Metallic plug serves the purpose well. Further, a plug 103 comprising metal, such as brass, is dimensionally stable which facilitates the installation of the module 106 as well as the insertion of the plug 103 into the ring 102. However, using polymeric material is more preferable, for example nylon. It is found that by using polymeric material, such as nylon, as the material of the plug 103, the audible distance of a sensor installed to the assembly 100 on an inflated inner tube 110, is around four times longer than the using metallic plug. The audibility is further improved when both ring 102 and plug 103 comprise plastic, such as nylon.

The plug 103 according to the invention comprises a first end having a first surface 103a and a second end having a second surface 103b. When the plug 103 is being inserted into the ring 102 by screwing, the plug 103 moves in a direction X that is directed from the first surface 103a to the second surface 103b. Thus, the second surface 103b of the plug 103 is facing inwards the cavity of the inner tube 110 when the inner tube is inflated. The second surface 103b is adapted for attaching a module 106, which comprises an electronic device, such as a sensor. The design of the plug 103 may vary according to the practical needs. For example, the plug 103 may be a solid plug, where the second surface 103b is about the same level as the edge observing from a side view of the plug, as illustrated in Fig. 1. The plug 103 may also be a hollow plug, and the second surface 103b may be a depressed part of the plug 103 for accepting the module 106, for example as illustrated in Fig. 2b and Fig. 3. It is to be noted that the design of the plug 103 shown in a Figure is not necessarily linked to other components in the same Figure, but can be applied together with components shown in another Figure as well. The arrangement allows the module 106 comprising an electronic device to be situated inside the cavity of the inner tube, thus enabling the conditions inside the inner tube to be monitored accurately, thus making the driving safer. The plug 103 is removable, and thus it is easy to replace the module 106 when necessary.

The assembly 100 may further comprise a cover covering the first surface 103a of the plug 103 and the ring 102. The cover can on one hand, protect the ring 102 and the plug 103 from mechanical stress and, on the other hand, operate as an additional air barrier. Preferably, the cover is made of elastic material, such as butyl rubber.

The assembly 100 may be conveniently installed to any location of the inner tube 110. Preferably, the assembly 100 is installed to the outermost surface of the inner tube 110. For example, the assembly 100 is located at a location on the surface of the inner tube 110, whereby a direction of the axis X of the ring 102, said direction being directed from the first surface 103a to the second surface 103b, intersects and forms an angle α with the rotational axis Z of the inner tube, said angle α being equal or more than 85 degrees, and at most 95 degrees, as illustrated in Fig. 4. Thus, the location of the assembly 100 is close to the tread area of the tire, when the inner tube 110 is installed into the tire. This enables measurement of additional variables, such as load and more exact temperature of the tread area, compared to the installation on the, for example, innermost surface.

The ring 102 may be directly installed to an inner tube 110 using vulcanizing process.

Alternatively, the base film 101 may be a separate patch which is configured to be attached to the exterior or the interior surface of the inner tube. The separate patch, as mentioned, means it is a different item from the inner tube. Such an assembly 100 comprising a base film 101 which is a separate patch can be attached to the inner tube as the following method:
- making a hole on a surface of the inner tube 110, said hole is not smaller than the hole of the base film 101,
- applying adhesive onto a contacting surface of the base film 101, wherein said contacting surface is to be contacted with the inner tube 110,
- attaching the assembly 100 to the inner tube 110 while aligning the hole of the inner tube 110 and the hole of the base film 101,
- pressing the base film 101 to the inner tube 110 while curing the adhesive.

The method mentioned herein, preferably, before the step of applying adhesive, further comprises cleaning the contacting surface of the base film with acetone. This way the attachment between the base film 101 and the inner tube 110 is further enhanced.

In the method mentioned herein, preferably, the step of applying adhesive comprises applying two layers of adhesive with a time interval, such as one hour. This way the attachment between the base film 101 and the inner tube 110 is further enhanced.

The method mentioned herein, preferably, before the step of applying adhesive, further comprises roughing the contacting surface of the base film wire brush and/or sand paper. This way the attachment between the base film 101 and the inner tube 110 is further enhanced.

In the method mentioned herein, preferably, the step of curing is continued for a period of time which is at least two times longer than the required time for the adhesive to cure. This way the attachment between the base film 101 and the inner tube 110 is further enhanced.

## Claims

1. An assembly (100) for an inner tube (110) for a tire, comprising
- a base film (101, 201), which is forming a part of the inner tube (110) or configured to be attached to the inner tube (110),
- a ring (102), which is inserted into a hole through the base film (101, 201), said ring (102) comprising
o internal threads of a fasten mechanism,
- a plug (103), which is removably insertable in the ring (102), said plug (103) comprising
o external threads of the fasten mechanism,
o a first end having a first surface (103a) adapted to face outwards a cavity of the inner tube when inflated,
o a second end having a second surface (103b) adapted to face inwards the cavity of the inner tube and adapted for attaching a module (104) comprising an electronic device.

2. An inner tube for a tire, comprising
- an exterior surface and
- an interior surface, which defines a cavity when the inner tube is inflated,
**characterized in that,** the inner tube further comprises
- a ring (102), which is inserted into a hole through the inner tube, said ring (102) comprising
o internal threads of a fasten mechanism,
- a plug (103), which is removably insertable in the ring (102), said plug (103) comprising
o external threads of the fasten mechanism,
o a first end having a first surface (103a) facing outwards the cavity of the inner tube,
o a second end having a second surface (103b) facing inwards the cavity of the inner tube and being adapted for attaching a module comprising an electronic device.

3. The assembly according to claim 1, wherein the base film (201) is an integrated part of the inner tube; alternatively, the base film (101) is a separate patch which is configured to be attached to the exterior or the interior surface of the inner tube.

4. The inner tube according to claim 2, wherein the ring (102) is inserted into a hole through a base film (101), which is a separate patch which has been attached to the exterior or the interior surface of the inner tube.

5. The assembly according to claim 1 or 3, or the inner tube according to claim 4, wherein the base film (101, 201) comprises elastic material, such as rubber; preferably, the base film (101, 201) is vulcanized to the ring (102).

6. The assembly according to any of claims 1, 3 and 5 or the inner tube according to any of claims 2, 4 and 5, wherein the ring (102) comprises metal, alloy, polymer, or composite; preferably, the ring (102) comprises brass; and/or wherein the plug (103) comprises polymeric material, such as nylon.

7. The assembly according to any of claims 1, 3, 5 and 6 or the inner tube according to any of claims 2, 4, 5 and 6,, wherein the ring (102) has a diameter no more than 40 mm, preferably no more than 30 mm, measured from the outmost edge of the ring (102).

8. The assembly according to any of claims 1, 3, 5, 6 and 7 or the inner tube according to any of claims 2 and 4-7, wherein the ring (102) further comprises a circumferential protruding shoulder (104), which protrudes laterally outwards from the ring (102) and is embedded in the base film (101, 201); preferably, the circumferential protruding shoulder (104) comprises at least one hole.

9. The assembly according to any of claims 1, 3 and 5-8 or the inner tube according to any of claims 2 and 4-8, further comprising a O-ring (105), which is situated between the ring (102) and the plug (103).

10. The assembly according to any of claims 1, 3 and 5-9 or the inner tube according to any of claims 2 and 4-9, further comprising a cover covering the first surface (103a) of the plug and/or the ring; preferably the cover is made of elastic material, such as butyl rubber.

11. A sensor-assembly for an inner tube (110) for a tire or of an inner tube (110) for a tire, said sensor-assembly comprising the assembly (100) according to any of the claims 1, 3 and 5-10, and a sensor.

12. A method for attaching an assembly to an inner tube for a tire, comprising
- preparing the assembly (100) according to any of the claims 1, 3 and 5 to 9, wherein the base film (101) is a separate patch,
- making a hole on the surface of the inner tube (110), said hole is not smaller than the hole of the base film (101),
- applying adhesive onto a contacting surface of the base film (101), wherein said contacting surface is to be contacted with the inner tube (110),
- attaching the assembly to the inner tube (110) while aligning the hole of the inner tube and the hole of the base film (101),
- pressing the base film (101) to the inner tube (110) while curing the adhesive.

13. The method according to claim 12, further comprising,
before the step of applying adhesive, cleaning the contacting surface of the base film with acetone; and/or
before the step of applying adhesive, roughing the contacting surface of the base film wire brush and/or sand paper.

14. The method according to claim 12 or 13,
wherein the step of applying adhesive comprises applying two layers of adhesive with a time interval, such as one hour; and/or
wherein the step of curing is continued for a period of time which is at least two times longer than the required time for the adhesive to cure.

## Patentansprüche

1. Anordnung (100) für einen Innenschlauch (110) für einen Reifen, umfassend
- einen Grundfilm (101, 201), der einen Teil des Innenschlauchs (110) bildet oder dafür konfiguriert ist, an dem Innenschlauch (110) angebracht zu werden,
- einen Ring (102), der durch den Grundfilm (101, 201) in ein Loch eingeführt ist, wobei der Ring (102) Folgendes umfasst:
o Innengewinde eines Befestigungsmechanismus,
- einen Pfropfen (103), der lösbar in den Ring (102) einführbar ist, wobei der Pfropfen (103) Folgendes umfasst:
o Außengewinde des Befestigungsmechanismus,
o ein erstes Ende mit einer ersten Oberfläche (103a), die dazu geeignet ist, nach außen von einem Hohlraum des Innenschlauchs zu weisen, wenn dieser aufgeblasen ist,
o ein zweites Ende mit einer zweiten Oberfläche (103b), die dazu geeignet ist, nach innen zum Hohlraum des Innenschlauchs zu weisen und die dazu geeignet ist, ein Modul (104), das eine elektronische Vorrichtung umfasst, anzubringen.

2. Innenschlauch für einen Reifen, umfassend
- eine Außenfläche und
- eine Innenfläche, die einen Hohlraum definiert, wenn der Innenschlauch aufgeblasen ist,
**dadurch gekennzeichnet, dass** der Innenschlauch ferner Folgendes umfasst:
- einen Ring (102), der durch den Innenschlauch in ein Loch eingeführt ist, wobei der Ring (102) Folgendes umfasst:
o Innengewinde eines Befestigungsmechanismus,
- einen Pfropfen (103), der lösbar in den Ring (102) einführbar ist, wobei der Pfropfen (103) Folgendes umfasst:
o Außengewinde des Befestigungsmechanismus,
o ein erstes Ende mit einer ersten Oberfläche (103a), die nach außen von dem Hohlraum des Innenschlauchs weist,
o ein zweites Ende mit einer zweiten Oberfläche (103b), die nach innen zum Hohlraum des Innenschlauchs weist und dazu geeignet ist, ein Modul, das eine elektronische Vorrichtung umfasst, anzubringen.

3. Anordnung nach Anspruch 1, wobei der Grundfilm (201) ein integrierter Teil des Innenschlauchs ist; alternativ der Grundfilm (101) ein separates Füllstück ist, das dafür konfiguriert ist, an der Außen- oder der Innenfläche des Innenschlauchs angebracht zu werden.

4. Innenschlauch nach Anspruch 2, wobei der Ring (102) durch einen Grundfilm (101) in ein Loch eingeführt ist, welcher ein separates Füllstück ist, das an der Außen- oder der Innenfläche des Innenschlauchs angebracht worden ist.

5. Anordnung nach Anspruch 1 oder 3, oder Innenschlauch nach Anspruch 4, wobei der Grundfilm (101, 201) ein elastisches Material wie Kautschuk umfasst; vorzugsweise der Grundfilm (101, 201) an den Ring (102) vulkanisiert ist.

6. Anordnung nach einem der Ansprüche 1, 3 und 5 oder Innenschlauch nach einem der Ansprüche 2, 4 und 5, wobei der Ring (102) Metall, eine Legierung, Polymer oder einen Verbundstoff umfasst, vorzugsweise der Ring (102) Messing umfasst; und/oder wobei der Pfropfen (103) ein Polymermaterial wie Nylon umfasst.

7. Anordnung nach einem der Ansprüche 1, 3, 5 und 6 oder Innenschlauch nach einem der Ansprüche 2, 4, 5 und 6, wobei der Ring (102) einen Durchmesser von nicht mehr als 40 mm, vorzugsweise nicht mehr als 30 mm, gemessen von der äußersten Kante des Rings (102), aufweist.

8. Anordnung nach einem der Ansprüche 1, 3, 5, 6 und 7 oder Innenschlauch nach einem der Ansprüche 2 und 4 bis 7, wobei der Ring (102) ferner eine umfängliche vorstehende Schulter (104) umfasst, die seitlich nach außen von dem Ring (102) vorsteht und in dem Grundfilm (101, 201) eingebettet ist; vorzugsweise die umfängliche vorstehende Schulter (104) mindestens ein Loch umfasst.

9. Anordnung nach einem der Ansprüche 1, 3 und 5 bis 8 oder Innenschlauch nach einem der Ansprüche 2 und 4 bis 8, ferner umfassend einen O-Ring (105), der sich zwischen dem Ring (102) und dem Pfropfen (103) befindet.

10. Anordnung nach einem der Ansprüche 1, 3 und 5 bis 9 oder Innenschlauch nach einem der Ansprüche 2 und 4 bis 9, ferner umfassend eine Abdeckung, die die erste Oberfläche (103a) des Pfropfens und/oder des Rings bedeckt; wobei vorzugsweise die Abdeckung aus einem elastischen Material wie Butylkautschuk gefertigt ist.

11. Sensoranordnung für einen Innenschlauch (110) für einen Reifen oder eines Innenschlauchs (110) für einen Reifen, wobei die Sensoranordnung die Anordnung (100) nach einem der Ansprüche 1, 3 und 5 bis 10 und einen Sensor umfasst.

12. Verfahren zum Anbringen einer Anordnung an einen Innenschlauch für einen Reifen, umfassend
- Vorbereiten der Anordnung (100) nach einem der Ansprüche 1, 3 und 5 bis 9, wobei der Grundfilm (101) ein separates Füllstück ist,
- Herstellen eines Lochs auf der Oberfläche des Innenschlauchs (110), wobei das Loch nicht kleiner als das Loch des Grundfilms (101) ist,
- Aufbringen von Klebstoff auf eine Kontaktfläche des Grundfilms (101), wobei die Kontaktfläche mit dem Innenschlauch (110) in Kontakt zu bringen ist,
- Anbringen der Anordnung an dem Innenschlauch (110), während das Loch des Innenschlauchs und das Loch des Grundfilms (101) ausgerichtet werden,
- Pressen des Grundfilms (101) an den Innenschlauch (110), während der Klebstoff aushärtet.

13. Verfahren nach Anspruch 12, ferner umfassend
vor dem Schritt des Aufbringens des Klebstoffs, Reinigen der Kontaktfläche des Grundfilms mit Aceton; und/oder
vor dem Schritt des Aufbringens des Klebstoffs, Aufrauen der Kontaktfläche des Grundfilms mit einer Drahtbürste und/oder Sandpapier.

14. Verfahren nach Anspruch 12 oder 13,
wobei der Schritt des Aufbringens von Klebstoff das Aufbringen von zwei Schichten von Klebstoff mit einem Zeitintervall wie einer Stunde umfasst; und/oder wobei der Schritt des Aushärtens für einen Zeitraum fortgesetzt wird, der mindestens das Zweifache der Zeit beträgt, die für das Aushärten des Klebstoffs notwendig ist.

## Revendications

1. Ensemble (100) pour un tube interne (110) pour un pneu, comprenant
- un film de base (101, 201), lequel forme une partie du tube interne (110) ou est configuré pour être fixé sur le tube interne (110),
- une bague (102), laquelle est insérée à l'intérieur d'un trou à travers le film de base (101, 201), ladite bague (102) comprenant
o des filetages internes d'un mécanisme d'attache,
- un bouchon (103), lequel est insérable de manière amovible dans la bague (102), ledit bouchon (103) comprenant
o des filetages externes du mécanisme d'attache,
o une première extrémité ayant une première surface (103a) adaptée à faire face vers l'extérieur à une cavité du tube interne lorsqu'il est gonflé,
o une deuxième extrémité ayant une deuxième surface (103b) adaptée à faire face vers l'intérieur à la cavité du tube interne et adaptée à fixer un module (104) comprenant un dispositif électronique.

2. Tube interne pour un pneu, comprenant
- une surface extérieure et
- une surface intérieure, laquelle définit une cavité lorsque le tube interne est gonflé,
**caractérisé en ce que** le tube interne comprend en outre
- une bague (102), laquelle est insérée à l'intérieur d'un trou à travers le tube interne, ladite bague (102) comprenant
o des filetages internes d'un mécanisme d'attache,
- un bouchon (103), lequel est insérable de manière amovible dans la bague (102), ledit bouchon (103) comprenant
o des filetages externes du mécanisme d'attache,
o une première extrémité ayant une première surface (103a) faisant face vers l'extérieur à la cavité du tube interne,
o une deuxième extrémité ayant une deuxième surface (103b) faisant face vers l'intérieur à la cavité du tube interne et étant adaptée à fixer un module comprenant un dispositif électronique.

3. Ensemble selon la revendication 1, dans lequel le film de base (201) fait partie intégrante du tube interne ; en variante, le film de base (101) est une pièce séparée qui est configurée pour être fixée sur la surface extérieure ou intérieure du tube interne.

4. Tube interne selon la revendication 2, dans lequel la bague (102) est insérée à l'intérieur d'un trou à travers un film de base (101), lequel est une pièce séparée qui a été fixée sur la surface extérieure ou intérieure du tube interne.

5. Ensemble selon la revendication 1 ou la revendication 3, ou tube interne selon la revendication 4, dans lequel le film de base (101, 201) comprend une matière élastique, telle que du caoutchouc ; de préférence, le film de base (101, 201) est vulcanisé sur la bague (102).

6. Ensemble selon l'une quelconque des revendications 1, 3 et 5 ou tube interne selon l'une quelconque des revendications 2, 4 et 5, dans lequel la bague (102) comprend un métal, un alliage, un polymère, ou un composite ; de préférence, la bague (102) comprend du laiton ; et/ou dans lequel le bouchon (103) comprend une matière polymère, telle que du nylon.

7. Ensemble selon l'une quelconque des revendications 1, 3, 5 et 6 ou tube interne selon l'une quelconque des revendications 2, 4, 5 et 6, dans lequel la bague (102) présente un diamètre pas supérieur à 40 mm, de préférence pas supérieur à 30 mm, mesuré à partir du bord le plus externe de la bague (102).

8. Ensemble selon l'une quelconque des revendications 1, 3, 5, 6 et 7 ou tube interne selon l'une quelconque des revendications 2 et 4 à 7, dans lequel la bague (102) comprend en outre un épaulement circonférentiel en saillie (104), lequel fait saillie latéralement vers l'extérieur à partir de la bague (102) et est incorporé dans le film de base (101, 201) ; de préférence, l'épaulement circonférentiel en saillie (104) comprend au moins un trou.

9. Ensemble selon l'une quelconque des revendications 1, 3 et 5 à 8 ou tube interne selon l'une quelconque des revendications 2 et 4 à 8, comprenant en outre un joint torique (105), lequel est situé entre la bague (102) et le bouchon (103).

10. Ensemble selon l'une quelconque des revendications 1, 3 et 5 à 9 ou tube interne selon l'une quelconque des revendications 2 et 4 à 9, comprenant en outre un couvercle recouvrant la première surface (103a) du bouchon et/ou la bague ; de préférence le couvercle est réalisé en matière élastique, telle que du caoutchouc butylique.

11. Ensemble à capteur pour un tube interne (110) pour un pneu ou d'un tube interne (110) pour un pneu, ledit ensemble à capteur comprenant l'ensemble (100) selon l'une quelconque des revendications 1, 3 et 5 à 10, et un capteur.

12. Procédé pour fixer un ensemble sur un tube interne pour un pneu, comprenant
- le fait de préparer l'ensemble (100) selon l'une quelconque des revendications 1, 3 et 5 à 9, dans lequel le film de base (101) est une pièce séparée,
- le fait de faire un trou sur la surface du tube interne (110), ledit trou n'étant pas plus petit que le trou du film de base (101),
- le fait d'appliquer de l'adhésif sur une surface de contact du film de base (101), dans lequel ladite surface de contact est destinée à être mise en contact avec le tube interne (110),
- le fait de fixer l'ensemble sur le tube interne (110) tout en alignant le trou du tube interne et le trou du film de base (101),
- le fait de presser le film de base (101) sur le tube interne (110) tout en faisant durcir l'adhésif.

13. Procédé selon la revendication 12, comprenant en outre,
avant l'étape d'application d'adhésif, le fait de nettoyer la surface de contact du film de base avec de l'acétone ; et/ou
avant l'étape d'application d'adhésif, le fait de dégrossir la surface de contact du film de base avec une brosse métallique et/ou du papier de verre.

14. Procédé selon la revendication 12 ou la revendication 13,
dans lequel l'étape d'application d'adhésif comprend le fait d'appliquer deux couches d'adhésif avec un intervalle de temps, tel qu'une heure ; et/ou
dans lequel l'étape de durcissement est poursuivie pendant une période de temps qui est au moins deux fois plus longue que le temps requis pour que l'adhésif durcisse.
